# EUROPEAN PATENT SPECIFICATION

(11) **EP 1 715 399 B1**
(45) Date of publication and mention of the grant of the patent: **01.05.2019**
(21) Application number: 06000711.9
(22) Date of filing: 13.01.2006
(51) Int. Cl.: G05D 1/02

(54) **Robot cleaner driving method**
Steuerverfahren für einen Reinigungsroboter
Procédé de commande d'un robot nettoyeur

(30) Priority: 23.04.2005 KR 2005033841
(43) Date of publication of application: 25.10.2006
(73) Proprietor: LG Electronics Inc., Seoul 150-010 (KR)
(72) Inventor: Kim, Jong Sung, Seoul 153-030 (KR)
(74) Representative: Vossius & Partner Patentanwälte Rechtsanwälte mbB

(56) References cited:
- EP-A1- 1 557 730
- US-A- 5 696 675
- US-A1- 2004 236 468
- GARCIA E ET AL: "Mobile-robot navigation with complete coverage of unstructured environments", ROBOTICS AND AUTONOMOUS SYSTEMS, ELSEVIER SCIENCE PUBLISHERS, AMSTERDAM, NL, vol. 46, no. 4, 30 April 2004 (2004-04-30) , pages 195-204, XP004500950, ISSN: 0921-8890, DOI: 10.1016/J.ROBOT.2004.02.005

## Description

The present invention relates to a robot cleaner driving method, and, more particularly, to a robot cleaner driving method that is capable of partitioning a space to be cleaned into one or more cells, setting drive routes along which the robot cleaner is driven in the respective partitioned cells, and cleaning the respective partitioned cells in order.

Generally, a robot cleaner is a cleaning apparatus incorporating a microcomputer, in which a robot cleaner driving method is implemented. A driving unit of the robot cleaner is controlled by the microcomputer such that the robot cleaner performs a cleaning operation for cleaning a space to be cleaned while the robot cleaner is driven.

Conventional robot cleaner driving methods are classified into a zigzag-type robot cleaner driving method and a spiral-type robot cleaner driving method.

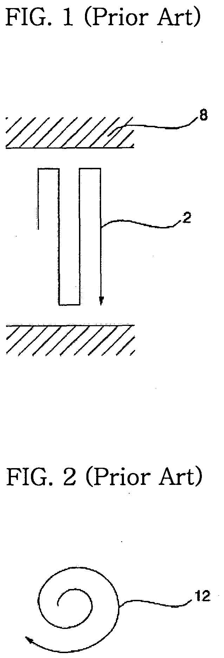

FIGS. 1 and 2 illustrate the conventional robot cleaner driving methods, wherein FIG. 1 is a view illustrating the zigzag-type robot cleaner driving method, and FIG. 2 is a view illustrating the spiral-type robot cleaner driving method.

As shown in FIG. 1, the zigzag-type robot cleaner driving method, which is indicated by reference numeral 2, comprises: a first driving step of driving the robot cleaner along a straight drive route until the robot cleaner comes across an obstruction 8; and a second driving step of turning the robot cleaner to the direction perpendicular to the direction in which the robot cleaner is driven at the first driving step when the robot cleaner comes across the obstruction 8, driving the robot cleaner along the obstruction 8 to a predetermined distance from the drive route of the first driving step, and turning the robot cleaner to the direction opposite to the direction in which the robot cleaner is driven at the first driving step. The first and second driving steps are alternately performed.

As shown in FIG. 2, the spiral-type robot cleaner driving method is a method of driving a robot cleaner along a spiral drive route, the turning radius of which is gradually increased as the robot cleaner is driven while being turned.

In the conventional zigzag-type robot cleaner driving method, however, when one part of the cleaning space is cleaned, i.e., when the driving operation of the robot cleaner is started at the center of the cleaning space, and the cleaning space is divided into two parts by the driving operation of the robot cleaner or the cleaning space is divided into two parts by the driving operation of the robot cleaner at the first driving step due to the obstruction present in the cleaning space, it is required that the robot cleaner be returned to the starting point of the driving operation in order to clean the other part of the cleaning space. As a result, the driving operation of the robot cleaner is unnecessarily repeated. Furthermore, the zigzag-type robot cleaner driving method is not changed according to the progress of the cleaning operation. Consequently, it is difficult to confirm when the cleaning operation of the robot cleaner is completed.

In the conventional spiral-type robot cleaner driving method, when the robot cleaner comes across the obstruction, the robot cleaner is driven along another spiral route, the spiral direction of which is opposite to the spiral direction of the initial spiral route, in order to detour the obstruction. As a result, the turning radius of the spiral route, which is gradually increased as the robot cleaner is driven, after the direction of the robot cleaner is changed is deviated from that of the spiral route, which is gradually increased as the robot cleaner is driven, before the direction of the robot cleaner is changed. Consequently, the cleaning space is incompletely cleaned, and therefore, the cleaning efficiency of the robot cleaner is decreased.

US 2004/236468 A1 discloses a robot cleaner using subgrid based cleaning.

It is an object of the present invention to provide a robot cleaner driving method that is capable of improving the cleaning efficiency of the robot cleaner irrespective of an obstruction, reducing unnecessary driving operation of the robot cleaner, and predicting completion of the cleaning operation of the robot cleaner.

In accordance with one aspect of the present invention, the above and other objects can be accomplished by the provision of a robot cleaner driving method, as defined in independent claim 1. Further preferred features are set forth in dependent claims.

Preferably, the imaginary space is cleaned in the direction of a spiral on the per cell basis.

Preferably, the turning steps are performed after the respective cleaning steps or the respective setting steps are completed.

Preferably, the respective setting steps are performed simultaneously when the cleaning steps or the turning steps are performed such that the respective setting steps are realized by restricting the space in which the robot cleaner is driven at the cleansing steps to be a part of the space to be cleaned.

Preferably, the setting steps are performed again after the cleaning steps are completed, and, the setting steps are performed again such that the imaginary space is set excluding the already cleaned space.

Preferably, the robot cleaner is positioned on the space adjacent to the next cells to be cleaned when at least some of the cleansing steps are completed such that the robot cleaner is not required to be driven at the respective turning steps.

Preferably, at least some of the cleaning steps have similar drive routes.

Preferably, each of the cells is formed in the shape of a rectangle or a square.

Preferably, the robot cleaner is driven in zigzags in the interior of each of the cells assigned to at least some of the cleaning steps, respectively.

Preferably, at least some of the cleaning steps each comprises one or more driving steps of driving the robot cleaner along a zigzag route including: a plurality of first routes arranged in parallel with one another at predetermined intervals such that the cleaning spaces are not overlapped with each other while the interior of each of the cells assigned to the corresponding cleaning steps is completely cleaned; and a plurality of second routes connected between the adjacent first routes at the minimum distance such that the robot cleaner is continuously driven along the first routes while the first routes are not overlapped with one another.

In accordance with another aspect
there is provided a robot cleaner driving method, comprising: one or more setting steps of setting an imaginary space, including a space to be cleaned, and partitioning the imaginary space into one or more cells; one or more cleaning steps, which are assigned to the respective cells, of driving the robot cleaner to clean the assigned cells; one or more turning steps of driving the robot cleaner to the next cell to be cleaned, such that the imaginary space is cleaned on a per cell basis; an obstruction sensing step of sensing an obstruction while the robot cleaner is driven during the execution of the cleaning steps or the turning steps; and an obstruction detouring step for enabling the robot cleaner to detour the obstruction sensed at the obstruction sensing step while the robot cleaner is driven.

Preferably, the imaginary space is cleaned in the direction of a spiral on the per cell basis.

Preferably, the turning steps are performed after the respective cleaning steps or the respective setting steps are completed.

Preferably, the respective setting steps are performed simultaneously when the cleaning steps or the turning steps are performed such that the respective setting steps are realized by restricting the space in which the robot cleaner is driven at the cleansing steps to be a part of the space to be cleaned.

Preferably, the setting steps are performed again after the cleaning steps are completed, and, the setting steps are performed again such that the imaginary space is set excluding the already cleaned space.

Preferably, the robot cleaner is positioned in the space adjacent to the next cells to be cleaned when at least some of the cleansing steps are completed such that the robot cleaner is not required to be driven at the respective turning steps.

Preferably, at least some of the cleaning steps have similar drive routes.

Preferably, each of the cells is formed in the shape of a rectangle or a square.

Preferably, the robot cleaner is driven in zigzags in the interior of each of the cells assigned to at least some of the cleaning steps, respectively.

Preferably, at least some of the cleaning steps each comprises one or more driving steps of driving the robot cleaner along a zigzag route including: a plurality of first routes arranged in parallel with one another at predetermined intervals such that the cleaning spaces are not overlapped with each other while the interior of each of the cells assigned to the corresponding cleaning steps is completely cleaned; and a plurality of second routes connected between the adjacent first routes at the minimum distance such that the robot cleaner is continuously driven along the first routes while the first routes are not overlapped with one another.

According to the present invention, the cleaning space is partitioned into one or more cells, and the driving operations of the robot cleaner suitable to clean the cells are performed. Consequently, the present invention has the effect of improving the cleaning efficiency of the cells and thus improving the cleaning efficiency of the entire cleaning space.

Also, the cleaning operations are performed in the spiral direction on a per cell basis. Consequently, the present invention has the effect of enabling the user or the microcomputer mounted in the robot cleaner to easily confirm the progress of the cleaning operations and when the cleaning operation is completed and to confirm the change of the cleaning method according to the progress of the cleaning operations, including confirmation of the battery level.

Since the cleaning operations are performed in the spiral direction on a per cell basis as described above, it is not possible that the cleaning space is divided into two parts. Consequently, the present invention has the effect of reducing unnecessary driving operations of the robot cleaner.

Furthermore, the cleaning operations are performed on a per cell basis while the robot cleaner detours the obstruction. Consequently, the present invention has the effect of improving the cleaning efficiency of the robot cleaner.

The above and other objects, features and other advantages of the present invention will be more clearly understood from the following detailed description taken in conjunction with the accompanying drawings, in which:
FIGS. 1 and 2 illustrate conventional robot cleaner driving methods, wherein
   FIG. 1 is a view illustrating a zigzag-type robot cleaner driving method, and
   FIG. 2 is a view illustrating a spiral-type robot cleaner driving method;
FIGS. 3 to 9 illustrate a robot cleaner driving method according to a first preferred embodiment of the present invention, wherein

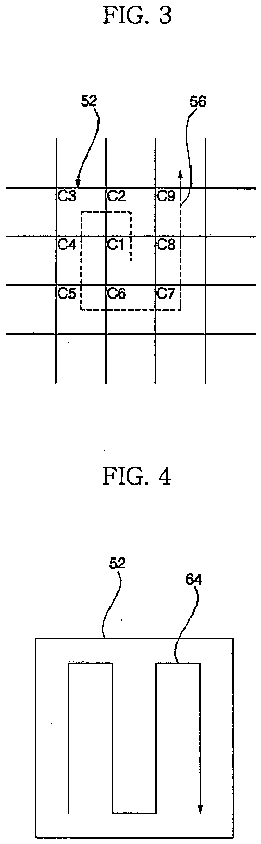

   FIG. 3 is a view illustrating implementation of the robot cleaner driving method according to the first preferred embodiment of the present invention,
   FIG. 4 is a view illustrating a drive route at a first cleaning step,

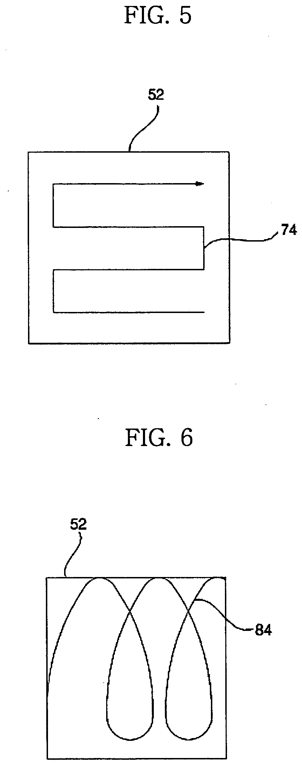

   FIG. 5 is a view illustrating a drive route at a second cleaning step,
   FIG. 6 is a view illustrating a drive route at a third cleaning step,

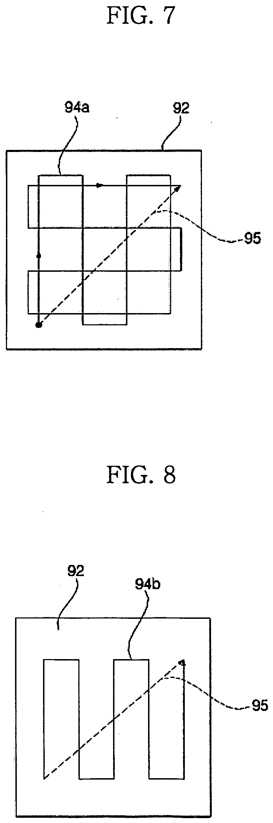

   FIG. 7 is a view illustrating a drive route at a fourth cleaning step,
   FIG. 8 is a view illustrating a drive route at a fifth cleaning step, and

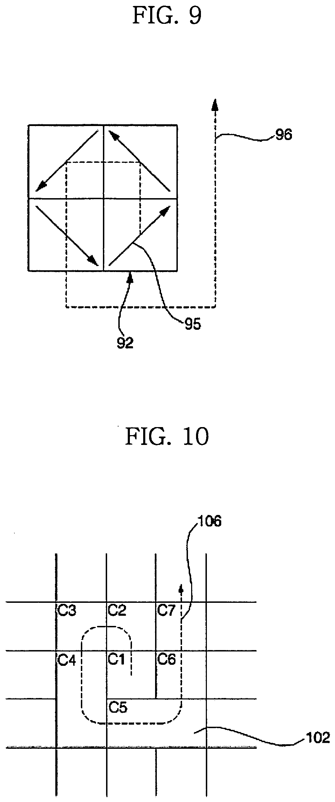

   FIG. 9 is a view illustrating turning steps of the robot cleaner driving method;

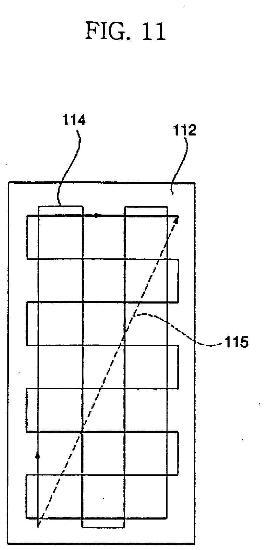

FIGS. 10 and 11 illustrate a robot cleaner driving method according to a second preferred embodiment of the present invention, wherein
   FIG. 10 is a view illustrating implementation of the robot cleaner driving method according to the second preferred embodiment of the present invention, and
   FIG. 11 is a view illustrating a drive route at a sixth cleaning step;

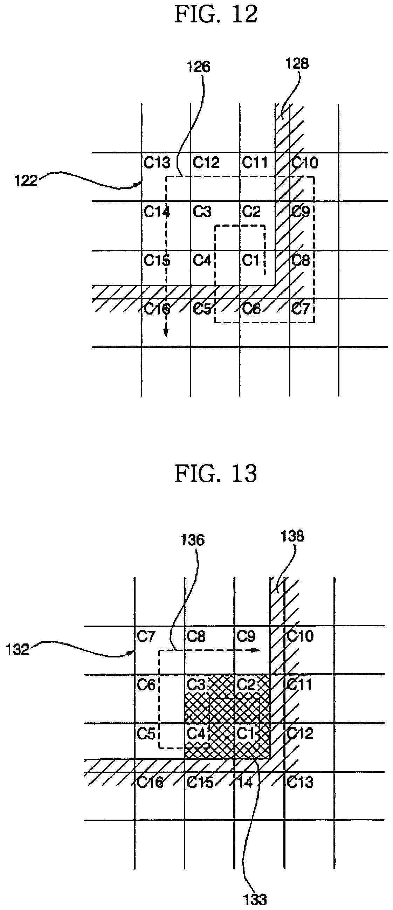

FIG. 12 is a view illustrating a robot cleaner driving method according to a third preferred embodiment of the present invention; and
FIG. 13 is a view illustrating a robot cleaner driving method according to a fourth preferred embodiment of the present invention.

Now, preferred embodiments of the present invention will be described in detail with reference to the accompanying drawings.

FIGS. 3 to 8 illustrate a robot cleaner driving method according to a first preferred embodiment of the present invention, wherein FIG. 3 is a view illustrating implementation of the robot cleaner driving method according to the first preferred embodiment of the present invention, FIG. 4 is a view illustrating a drive route at a first cleaning step, FIG. 5 is a view illustrating a drive route at a second cleaning step, FIG. 6 is a view illustrating a drive route at a third cleaning step, FIG. 7 is a view illustrating a drive route at a fourth cleaning step, and FIG. 8 is a view illustrating a drive route at a fifth cleaning step.

As illustrated in FIG. 3, the robot cleaner driving method according to the first preferred embodiment of the present invention comprises: one or more setting steps of setting an imaginary space, including a space to be cleaned, and partitioning the imaginary space into one or more cells 52; one or more cleaning steps, which are assigned to the respective cells 52, of driving the robot cleaner to clean the assigned cells 52 such that the directions of driving the robot cleaner are perpendicular to each other in some of the assigned cells 52; and one or more turning steps, which are performed after the cleaning steps or the setting steps are completed, of driving the robot cleaner to the next cell to be cleaned, at which one of the cleaning steps assigned to the cell is performed, such that the imaginary space is cleaned in the direction of a spiral 56 throughout the cells 52.

Preferably, the setting steps are performed after an initializing step of driving the robot cleaner along the wall to prepare a map of the space to be cleaned or predicting the position of an obstruction by mean of an obstruction sensing device. However, it is possible to perform the setting steps when the robot cleaner is driven without performing the initializing step.

Preferably, the setting steps are directly performed according to an algorithm additionally prepared to perform the setting steps. However, it is possible to indirectly perform the setting steps through the cleaning steps or the turning steps. For example, the space, in which the robot cleaner is driven, is restricted at the respective cleaning steps, the cells 52 to be cleaned next are set at the respective turning steps, and the information of the cells 52 are transmitted to the respective cleaning steps to be performed next.

At the setting steps, the shapes and the sizes of the cells 52 and the imaginary space are set such that the driving and cleaning operations are efficiently carried out based on the area and the map of the cleaning space, the position of the obstruction, or other information, which are previously stored, is manipulated by a user, or is acquired at the initializing step. However, it is possible to perform the setting steps without the above-described information.

Also, the respective setting step may be performed again after the cleaning steps are completed. When the setting step is performed again, it is preferable that the imaginary space is set excluding the cleaned space, and is then partitioned into one or more cells 52.

Specifically, the setting steps may be performed only once, may be further performed when necessary, or may be performed whenever one of the cleaning steps is completed.

It is preferable at the respective setting steps that the shapes and the sizes of the cells 52 are appropriately set, such that the driving and cleaning operations are efficiently carried out, when the area and the map of the cleaning space, the position of the obstruction, or other information necessary for driving the robot cleaner are stored.

At the respective setting steps, the cells 52 are set in the shape of a rectangle or a square. However, it is possible to set the cells 52 in the shape of a triangle, a diamond, or a polygon, such as a hexagon.

The cells 52 are set in shapes similar to one another such that the same algorithm is used to clean the respective cells 52. However, it is possible to differently set the sizes and the shapes of some of the cells 52 in consideration of the cleaning space, the obstruction, and the size of the robot cleaner.

Also, the cells 52 are preferably set such that the sizes of the cells 52 are not small or narrow to the extent that the respective cells 52 are completely cleaned even when the robot cleaner is merely driven in a straight line, or the direction of driving the robot cleaner is slightly changed. In other words, it is preferable to set the sizes of the cells 52 such that the cells 52 are completely cleaned after some of the driving operations are performed in the direction perpendicular to each other at the respective cleaning steps.

Also preferably, the respective cells 52 are set such that the sizes of the cells 52 are smaller than that of the space to be cleaned, and therefore, the cleaning operations are performed on a per cell basis.

After the respective setting steps are completed, the turning steps are performed. The turning steps, which are performed immediately after the completion of the setting steps, are configured such that the cleaning order of the cells 52 is previously set. However, it is possible to configure the turning steps such that the cells to be cleaned next are set whenever the respective turning steps are performed.

The respective turning steps are performed whenever the respective setting steps or the respective cleansing steps are completed. For example, the cleaning steps assigned to the cells to be cleaned are performed, and then, the respective turning steps are successively performed.

The spiral direction 56 is configured such that the robot cleaner is driven through cells C2 ∼ C9 from a first cell C1 counterclockwise. Alternatively, the spiral direction 56 may be configured such that the robot cleaner is driven through the cells C2 ∼ C9 from the first cell C1 clockwise.

Preferably, the first cell C1 is set such that the first cell C1 is positioned at the center of the stored cleaning space.

At the respective cleaning steps, the robot cleaner is driven in various drive modes, such as a spiral drive mode, a zigzag drive mode, and a random drive mode. It is preferable, at the respective cleaning steps, that the cells 52 assigned to the respective cleaning steps be completely cleaned while the drive route is minimally overlapped.

The respective cleaning steps have drive routes, by which the robot cleaner is positioned on the space adjacent to the cells to be cleaned when the respective cleansing steps are completed. Consequently, the completion and the execution of the respective cleaning steps are accomplished without driving the robot cleaner at the respective turning steps.

The respective cleaning steps are configured such that the respective cleaning steps have the same drive route or similar drive routes, and therefore, the same drive algorithm is used. However, the respective cleaning steps may be configured such that the respective cleaning steps have different drive routes in consideration of the shapes of the cells 52 assigned to the respective cleaning steps, the position of the obstruction in the respective cells 52, and the position of the cells 52 assigned to the previous cleaning step and the next cleaning step.

An obstruction sensing step may be performed to sense the obstruction while the robot cleaner is driven during the execution of the initializing step, the turning steps, or the cleaning steps.

When the obstruction, by which the driving operation of the robot cleaner is disturbed, is sensed at the obstruction sensing step, an obstruction detouring step is preferably performed such that the robot cleaner is driven while the robot cleaner detours the obstruction.

Preferably, the obstruction detouring step transmits information to the initializing step, the respective turning steps, or the respective cleaning steps, or modifies the progress of the initializing step, the respective turning steps, or the respective cleaning steps, such that the initializing step, the respective turning steps, or the respective cleaning steps are performed in consideration of the obstruction.

Preferably, the obstruction detouring step also receives information of the drive routes from the initializing step, the respective turning steps, or the respective cleaning steps, and is then directly performed according to an additionally preset algorithm. However, it is possible that the obstruction detouring step modifies the drive routes of the initializing step, the respective turning steps, or the respective cleaning steps, and is then indirectly performed through the initializing step, the respective turning steps, or the respective cleaning steps.

Preferably, the robot cleaner, to which the above-described robot cleaner driving method is applied, comprises: a case forming the contour of a main body; a cleaning unit mounted at the main body for cleaning the cleaning space; a drive unit for driving the main body while supporting the main body; a drive control unit connected to the drive unit for controlling movement, stop, and direction change of the main body; a drive measuring unit partially mounted in the main body for measuring the position, the driven distance or the driven direction; an obstruction sensing unit mounted at the contour of the main body for sensing the obstruction in the cleaning space; a manipulating unit partially mounted at the case for providing a user with an interface for operating the robot cleaner; an information processing unit for inputting and outputting, processing, and storing a signal to control the drive control unit, the obstruction sensing unit, and the manipulating unit or to exchange information with the drive control unit, the obstruction sensing unit, and the manipulating unit; a power supply unit for distributing power supplied from an external power source to the cleaning unit, the drive unit, the drive control unit, the obstruction sensing unit, and the manipulating unit.

Preferably, the cleaning unit comprises: a flow channel formed at the main body; a fan mounted in the flow channel for suctioning pollutants from the cleaning space; a brush part mounted at the inlet side of the flow channel for applying a physical force to the pollutant to assist the suctioning operation of the fan; a filter mounted in the flow channel for filtering out the pollutants to prevent the pollutants from being introduced into the fan or prevent the pollutant from being discharged from the flow channel; and a dust bag mounted in the flow channel for collecting the suctioned pollutants.

Preferably, the drive unit comprises: two or more main wheels rotatably mounted at the right and left sides of the lower part of the main body, respectively, for moving the main body while supporting the main body; two or more wheel motors mounted at the right and left sides of the main body, respectively, while being connected to the main wheels for rotating the main wheels within a predetermined range of rotating speed clockwise or counterclockwise, respectively; and a caster mounted at the lower part of the main body for supporting the main body while the caster is rotated in all the directions in which the main body can be moved.

The drive control unit drives or stops the respective wheel motors, according to a signal received from the information processing unit, such that the main body is stopped, moved forward or backward, turned, or in the combination thereof.

Preferably, the drive measuring unit comprises: a gyro sensor for sensing the rotated angles of the robot cleaner; and an encoder for recognizing the route along which the robot cleaner is driven.

Alternatively, the drive measuring unit may comprise: a position signal transmitter fixedly disposed in the cleaning space while being separated from the main body for transmitting a remote signal, such as an electromagnetic wave or a sound wave, in all directions; a position signal receiver mounted at the contour of the main body for receiving the remote signal transmitted from the position signal transmitter; and a position signal processor mounted in the main body for measuring the position and the direction of the main body based on the signal received by the position signal receiver.

Preferably, the obstruction sensing unit comprises a plurality of ultrasonic sensors, light sensors, or impact sensors mounted at the outside part of the main body for sensing a wall, by which the boundary of the cleaning space is restricted, a precipice, a structure disposed in the cleaning space, or other obstruction using sound waves, electromagnetic waves, or impact applied to the main body.

The manipulating unit comprises: a display part mounted at the case for displaying the operation state of the robot cleaner; and an input button part mounted adjacent to the display part for allowing the user to input operation commands.

Alternatively, the manipulating unit may comprise: a display part mounted at the case for displaying the operation state of the robot cleaner; a remote controller including an input part separated from the main body for allowing the user to input operation commands, a processing part for processing the inputted information in the form of a signal, and a transmitting part for transmitting the processed signal; and a receiver mounted at the case for receiving the signal from the remote controller.

The information processing unit has an algorithm including the setting steps, the cleaning steps, and the turning steps to perform the robot cleaner driving method according to the present invention.

Preferably, the information processing unit is a microcomputer comprising: an input/output part for inputting a signal from an external device connected to the information processing unit and outputting a signal to the external device; a memory for storing the inputted/outputted signal or processed signal, or the above-mentioned algorithm; a microprocessor for inputting/outputting or processing the signal and for controlling storing and deleting operations of the memory; and an interface circuit connected to the input/output part, the memory, and the microprocessor for allowing the signal to be transmitted between the input/output part, the memory, and the microprocessor therethrough.

Preferably, the power supply unit comprises: a battery configured such that the battery is charged with power supplied from an external power source; a charging part connected to the external power source for charging the battery with the power supplied from the external power source; and a power supply part for appropriately distributing power to the cleaning unit, the drive unit, the drive control unit, the obstruction sensing unit, and the manipulating unit from the battery.

Now, the method of driving the robot cleaner with the above-stated construction according to the first preferred embodiment of the present invention will be described in detail.

When the manipulating unit receives a command for starting the operation of the robot cleaner from a user, the manipulating unit transmits the signal to the microcomputer.

When the microcomputer receives the signal for starting the operation of the robot cleaner, the microcomputer performs the initializing step, and then performs the setting steps.

After the microcomputer performs the setting steps, the microcomputer performs a main routine comprising the turning steps and the cleaning steps. If the setting steps are to be performed again, the main routine is interrupted, and then the setting steps are performed again. Subsequently, the microcomputer performs a main routine comprising the turning steps and the cleaning steps reconfigured according to the setting steps, which is performed again.

The microcomputer performs the setting steps, and stores information of the imaginary space and the respective cells 52 in the memory of the microcomputer.

The microcomputer performs the turning steps, after the respective setting steps are completed, to fix the cleaning order, and then drive the robot cleaner to a starting point for the cleaning steps such that the cleaning steps assigned to the cells are performed in the fixed cleaning order.

The microcomputer transmits a signal necessary for the drive control unit to drive the robot cleaner. When the signal is transmitted to the drive control unit from the microcomputer, the drive control unit controls the wheel motors to be driven. As a result, the main wheels are rotated by the wheel motors, and therefore, the robot cleaner is moved by the main wheels while friction between the main wheels and the supporting surface of the cleaning space occurs.

After the turning step is completed, the microcomputer performs the cleaning step to output a cleaning signal to the cleaning unit and to output a drive signal to the drive control unit.

When the cleaning signal is outputted to the cleaning unit, the cleaning unit operates the fan and the brush part. The brush part applies a physical force to the pollutants in the cleaning space such that the pollutants are easily suctioned. The pollutants in the cleaning space are suctioned along with air through the flow channel by the fan. The suctioned air is filtered by the filter such that the pollutants are separated from the air, and only the air is discharged out of the robot cleaner through the flow channel. Subsequently, the pollutants, which are separated from the air by the filter, are collected in the dust bag.

When the respective cleaning steps are completed, the cleaning operations of the cells, to which the respective cleansing steps are assigned, are completed. Accordingly, the microcomputer performs the turning steps.

When the microcomputer outputs the operation signal to the obstruction sensing unit, the obstruction sensing unit senses the obstruction while the robot cleaner is driven or stopped according to the operation signal.

The obstruction sensing unit transmits the sensed information about the obstruction, such as the distance from the obstruction and the position of the obstruction, to the microcomputer in the form of a signal. When the signal is transmitted to the microcomputer, the microcomputer stores the information about the obstruction, or performs the obstruction detouring step when it is determined that the obstruction is present in the path of the robot cleaner.

The microcomputer temporarily escapes from the main routine, while the microcomputer carries the information about the drive route and the obstruction, to perform the obstruction detouring step. Specifically, the microcomputer performs a subroutine, in which the obstruction detouring step is embodied. After the subroutine is completed, the process is returned to the main routine.

While the microcomputer performs the subroutine having obstruction detouring step embodied therein, the microcomputer outputs a signal to the drive control unit such that the robot cleaner detours the obstruction. According to the signal outputted from the microcomputer, the drive control unit controls the wheel motors to be operated such that the robot cleaner is driven while the robot cleaner detours the obstruction.

Meanwhile, the drive measuring unit transmits information about the driving operation of the robot cleaner, such as the drive distance and the direction of the robot cleaner, to the microcomputer in the form of a signal. The microcomputer determines whether the driving operation of the robot cleaner is properly performed at the turning step, the cleaning step, or the obstruction detouring step. If necessary, the microcomputer outputs a signal to the drive control unit such that the driving operation of the robot cleaner is modified. When the signal is inputted to the drive control unit, the drive control unit controls the wheel motors to be operated such that the drive distance or the direction of the robot cleaner is modified.

FIG. 4 is a view illustrating a drive route at a first cleaning step according to the present invention.

As shown in FIG. 4, the first cleaning step comprises a driving step of driving the robot cleaner along a zigzag route 64 including: four first routes arranged in parallel with one another at predetermined intervals such that the current cleaning space is not overlapped with the previous cleaning space or overlap between the current cleaning space and the previous cleaning space is minimized while the interior of the assigned cell 52 is completely cleaned; and three second routes connected between the adjacent first routes at the minimum distance such that the robot cleaner is continuously driven along the first routes while the first routes are not overlapped with one another.

Preferably, each of the first routes is formed in the shape of a straight line, which is parallel with the right and left sides of the assigned cell 52, and the distance between one of the first routes and its neighboring first route is not greater than the cleaning width of the robot cleaner.

The cleaning width of the robot cleaner is set according to the size and the capacity of the cleaning unit of the robot cleaner, and is stored in the memory.

The microcomputer outputs a signal to the drive control unit, according to the position, the size, or the directions of the sides of the cell 52 assigned to the above-described cleaning step, the current position or the direction of the robot cleaner, the signal inputted from the drive measuring unit, and the information stored in the memory, such that the robot cleaner is driven along the zigzag route 64.

According to the signal transmitted to the drive control unit, the drive control unit controls the wheel motors, which are mounted at the right and left sides of the robot cleaner, to be operated in the same direction and at the same speed such that the robot cleaner is advanced straight, controls the wheel motors to be operated in opposite directions such that only the direction of the robot cleaner is changed, or controls only one of the wheel motors to be operated such that the robot cleaner is driven while the direction of the robot cleaner is changed.

FIG. 5 is a view illustrating a drive route at a second cleaning step according to the present invention.

As shown in FIG. 5, the second cleaning step is identical to the first cleaning step except for the direction of the drive route.

Specifically, the second cleaning step is performed along a zigzag route 74 including four first routes and three second routes. Each of the first routes is a straight line, which is parallel with the upper and lower sides of the assigned cell 52.

FIG. 6 is a view illustrating a drive route at a third cleaning step according to the present invention.

At the third cleaning step, as shown in FIG. 6, the robot cleaner is driven along a predetermined curved route 84 such that the assigned cell 52 is completed cleaned by the robot cleaner. The microcomputer transmits a signal to the drive control unit such that the robot cleaner is driven along the curved route 84. According to the signal transmitted to the drive control unit, the drive control unit controls the wheel motors, which are mounted at the right and left sides of the robot cleaner, to be operated at different speeds. At this time, the difference between the speeds of the wheel motors is changed based on the change in curvature of the curved route 84.

FIG. 7 is a view illustrating a drive route at a fourth cleaning step according to the present invention.

As shown in FIG. 7, the fourth cleaning step is a combination of the first cleaning step and the second cleaning step.

Specifically, the fourth cleaning step comprises two driving steps of driving the robot cleaner along a zigzag route 94a including: four first routes arranged in parallel with one another at predetermined intervals such that the current cleaning space is not overlapped with the previous cleaning space or overlap between the current cleaning space and the previous cleaning space is minimized while the interior of an assigned cell 92 is completely cleaned; and three second routes connected between the adjacent first routes at the minimum distance such that the robot cleaner is continuously driven along the first routes while the first routes are not overlapped with one another. In this case, the first routes of one of the driving steps are perpendicular to those of the other driving step.

At the fourth cleaning step, the driving step is performed twice for cleaning the interior of the cell 92. Consequently, the interior of the cell 92 is more completely cleaned.

At the fourth cleaning step, the driving operation of the robot cleaner is started from one of four corners of the cell 92 and ended at the corner diagonally opposite to the corner at which the driving operation of the robot cleaner is started. Consequently, the fourth cleaning step is shaped in the form of a direction vector 95 indicated by the diagonal line of the cell 92, and therefore, as shown in FIG. 9, it is possible to easily apply the turning step, according to the cleaning step configured such that the driving operation is not necessary at the turning step, by using the direction vector 95.

FIG. 8 is a view illustrating a drive route at a fifth cleaning step according to the present invention.

As shown in FIG. 8, the fifth cleaning step comprises a driving step of driving the robot cleaner along a zigzag route 94b including: fifth first routes arranged in parallel with one another at predetermined intervals such that the current cleaning space is not overlapped with the previous cleaning space or overlap between the current cleaning space and the previous cleaning space is minimized while the interior of the assigned cell 92 is completely cleaned; and four second routes connected between the adjacent first routes at the minimum distance such that the robot cleaner is continuously driven along the first routes while the first routes are not overlapped with one another.

The fifth cleaning step is shaped in the form of the direction vector 95 indicated by the diagonal line of the cell 92, and therefore, as shown in FIG. 9, it is possible to easily apply the turning step, according to the cleaning step configured such that the driving operation is not necessary at the turning step, by using the direction vector 95.

FIG. 9 is a view illustrating turning steps of the robot cleaner driving method. The turning steps are configured by using the fourth cleaning step and the fifth cleaning step.

At the turning steps according to the present invention, as shown in FIG. 9, the robot cleaner is positioned at the space adjacent to the next cell to be cleaned when the driving operation is completed at each of the cleansing steps. At the respective cleansing steps, the robot cleaner is driven along the same drive route shaped in the form of the direction vector 95. Consequently, the driving operations are not performed at the respective turning steps. The direction vector 95 is arranged in the direction of a spiral 96 such that the cells 92 are cleaned in the direction of a spiral 96 in the imaginary space, and the cleaning steps are performed along the direction vector 95.

FIGS. 10 and 11 illustrate a robot cleaner driving method according to a second preferred embodiment of the present invention, wherein FIG. 10 is a view illustrating implementation of the robot cleaner driving method according to the second preferred embodiment of the present invention, and FIG. 11 is a view illustrating a drive route at a sixth cleaning step.

As shown in FIG. 10, the robot cleaner driving method according to the second preferred embodiment of the present invention is identical to the robot cleaner driving method according to the first preferred embodiment of the present invention except that the shapes of some of the cells are differently set at the setting steps, and the turning steps and the cleaning steps are modified.

Specifically, some of the cells, such as cells C1, C2, C3, C6, and C7, are set in the form of a square, and remaining cells, such as cells C4 and C5, are set in the form of a rectangle having a size and a shape obtained from a combination of two squares.

The turning steps are configured in consideration of the sizes and the directions of the square cells C1, C2, C3, C6, and C7 and the rectangular cells C4 and C5.

The cleaning steps assigned to the square cells C1, C2, C3, C6, and C7 are configured such that the same driving algorithm is used, and therefore, the robot cleaner is driven along the same drive route or similar drive routes. Also, the cleaning steps assigned to the rectangular cells C4 and C5 are configured such that the same driving algorithm is used, and therefore, the robot cleaner is driven along the same drive route or similar drive routes. However, the drive routes at the cleaning steps assigned to the square cells C1, C2, C3, C6, and C7 are different from those at the cleaning steps assigned to the rectangular cells C4 and C5.

As shown in FIG. 11, the cleaning step assigned to each of the rectangular cells C4 and C5 (see FIG. 10) comprises two driving steps of driving the robot cleaner along a zigzag route including: a plurality of first routes arranged in parallel with one another at predetermined intervals such that the current cleaning space is not overlapped with the previous cleaning space or overlap between the current cleaning space and the previous cleaning space is minimized while the interior of each of the assigned rectangular cells C4 and C5 is completely cleaned; and a plurality of second routes connected between the adjacent first routes at the minimum distance such that the robot cleaner is continuously driven along the first routes while the first routes are not overlapped with one another. In this case, the first routes of one of the driving steps are perpendicular to those of the other driving step.

One of the driving steps, which is performed first, is configured such that the robot cleaner is driven along the zigzag route in the longitudinal direction, i.e., the zigzag route including four first routes and three second routes, which are parallel with the long sides of each of the rectangular cells C4 and C5, and the other driving step, which is successively performed, is configured such that the robot cleaner is driven along the zigzag route in the lateral direction, i.e., the zigzag route including eight first routes and seven second routes, which are parallel with the short sides of each of the rectangular cells C4 and C5. Alternatively, the driving steps may be configured such that the robot cleaner is driven along the zigzag route in the lateral direction, and is then driven along the zigzag route in the longitudinal direction.

At the cleaning step, the driving step is performed twice for cleaning the interior of each of the rectangular cells C4 and C5. Consequently, the interior of each of the rectangular cells C4 and C5 is more completely cleaned.

At the cleaning step, the driving operation of the robot cleaner is started from one of four corners of each of the rectangular cells C4 and C5 and ended at the corner diagonally opposite to the corner at which the driving operation of the robot cleaner is started. Consequently, the cleaning step is shaped in the form of a direction vector 115 indicated by the diagonal line of each of the rectangular cells C4 and C5, and therefore, it is possible to easily apply the turning step, according to the cleaning step configured such that the driving operation is not necessary at the turning step, by using the direction vector 95.

FIG. 12 is a view illustrating a robot cleaner driving method according to a third preferred embodiment of the present invention.

As shown in FIG. 12, the robot cleaner driving method according to the third preferred embodiment of the present invention is basically identical to the robot cleaner driving method according to the first preferred embodiment of the present invention except for the turning steps.

At the turning steps, a first cell C1 is not set to be positioned at the center of the stored cleaning space. The cell occupying the space in which the robot cleaner is currently positioned is set to be the first cell C1.

The above-described configuration is preferable when the setting steps are performed without performing the initializing step, for example, making a map of the cleaning space by the robot cleaner or when the information of the cleaning space is not stored in the memory.

The turning steps are configured such that the cells are cleaned in the direction of a spiral 126. In some of the cleaning steps and some of the turning steps, however, the obstruction detouring step is performed due to an obstruction 128, such as a wall, by which the cleaning space is restricted. Consequently, some of the cells, such as cells C5 ∼ C10 and C16, are not cleaned as the respective obstruction detouring steps are performed, and other cells, such as cells C1 ∼ C4 and C11 ∼ C15, are cleaned in order in the spiral direction.

FIG. 13 is a view illustrating a robot cleaner driving method according to a fourth preferred embodiment of the present invention.

As shown in FIG. 13, the robot cleaner driving method according to the fourth preferred embodiment of the present invention is basically identical to the robot cleaner driving method according to the third preferred embodiment of the present invention except that the setting steps are performed again, and the spiral direction at the turning steps, which are performed after the setting steps are performed again.

When the microcomputer determines that the setting steps are performed again to efficiently drive the robot cleaner or efficiently clean the cleaning space according to the position of an obstruction 138 and the size and the shape of the cleaning space even after the cleaning steps assigned to some of the cells C1 ∼ C4, the microcomputer interrupts the main routine and performs the setting steps again.

When the setting steps are performed again, an imaginary space is set excluding a cleaned space 133, i.e., the cells C1 ∼C4 already cleaned at the cleaning steps, and is then partitioned into a plurality of cells C5 ∼ C16.

The newly partitioned cells C5 ∼ C16 are set such that the cells C5 ∼ C16 have the same size, shape, and direction as the previously partitioned cells C1 ∼ C4. However, it is possible to differently set the sizes, shapes, and directions of the cells C5 ∼ C16.

Before the setting steps are performed again, the cleaning steps are performed such that the cells 132 are successively cleaned counterclockwise in the form of a spiral 136. After the setting steps are performed again, on the other hand, the cleaning steps are performed such that the cells 132 are successively cleaned clockwise in the form of the spiral 136.

According to the robot cleaner driving method, as apparent from the above description, the cleaning space is partitioned into one or more cells, and the driving operations of the robot cleaner suitable to clean the cells are performed. Consequently, the present invention has the effect of improving the cleaning efficiency of the cells and thus improving the cleaning efficiency of the entire cleaning space.

Also, the cleaning operations are performed in the spiral direction on a per cell basis. Consequently, the present invention has the effect of enabling the user or the microcomputer mounted in the robot cleaner to easily confirm the progress of the cleaning operations and when the cleaning operation is completed and to confirm the change of the cleaning method according to the progress of the cleaning operations, including confirmation of the battery level.

Since the cleaning operations are performed in the spiral direction on a per cell basis as described above, it is not possible that the cleaning space is divided into two parts. Consequently, the present invention has the effect of reducing unnecessary driving operations of the robot cleaner.

Furthermore, the cleaning operations are performed on a per cell basis while the robot cleaner detours the obstruction. Consequently, the present invention has the effect of improving the cleaning efficiency of the robot cleaner.

## Claims

1. A robot cleaner driving method, comprising:
setting step of setting a cleaning space, including a space to be cleaned, and partitioning the cleaning space into a plurality of cells (52; 102);
cleaning step of driving the robot cleaner and cleaning a first cell (C1) of the plurality of cells (52;102); and
moving step of driving the robot cleaner to the next cell, which is a second cell (C2), when there are one or more cells to be cleaned after cleaning the first cell (C1),
wherein the cleaning step and moving step are repeated until the plurality of cells (52, 102) is cleaned, and
wherein the cleaning space is cleaned on a per cell basis,
**characterized in that** the method further comprises re-setting step of setting a further cleaning space including a space to be cleaned, excluding the already cleaned space, and partitioning the further cleaning space into a plurality of cells, after the cleaning steps of the previously set cleaning space are completed.

2. The method of claim 1, wherein the cleaning space is cleaned in the direction of a spiral (56; 106) on the per cell basis.

3. The method of claim 1, wherein the robot cleaner is driven to clean the cell according to any one mode of a spiral drive mode, a zigzag drive mode, and a random drive mode while a drive route is minimally overlapped.

4. The method of claim 1, wherein the robot cleaner is positioned on the space adjacent to the next cells (52; 102) to be cleaned when the first cell (C1) is cleaned.

5. The method of claim 4, wherein the second cell (C2) is positioned on the space adjacent to the first cell (C1).

6. The method of claim 1, wherein there is at least one cell having same drive route with the first cell (C1).

7. The method of claim 1, wherein each of the cells (52; 102) is formed in the shape of a rectangle or a square.

8. The method of claim 1, wherein the cleaning step comprises one or more driving steps of driving the robot cleaner along a zigzag route (64; 74; 94a; 94b; 114) including:
a plurality of first routes arranged in parallel with one another at predetermined intervals such that the cleaning spaces are not overlapped with each other while the interior of each of the cells (52; 102) assigned to the corresponding cleaning steps is completely cleaned; and
a plurality of second routes connected between the adjacent first routes at the minimum distance such that the robot cleaner is continuously driven along the first routes while the first routes are not overlapped with one another.

9. The method of claim 1, further comprising:
an obstruction sensing step of sensing an obstruction (128; 138) while the robot cleaner is driven during the execution of the cleaning step or the moving step; and
an obstruction detouring step for enabling the robot cleaner to detour the obstruction (128; 138) sensed at the obstruction sensing step while the robot cleaner is driven.

10. The method of claim 1, wherein at the cleaning step, the robot cleaner is driven through cells (C2∼C9) from the first cell (C1) clockwise or counterclockwise.

11. The method of claim 10, wherein the first cell (C1) is positioned at the center of the plurality of cells (52, 102) of the cleaning space.

## Patentansprüche

1. Verfahren zum Fahren eines Reinigungsroboters, das aufweist:
einen Festlegungsschritt zum Festlegen eines Reinigungsraums, der einen zu reinigenden Raum aufweist, und zum Aufteilen des Reinigungsraums in mehrere Zellen (52; 102);
einen Reinigungsschritt zum Fahren des Reinigungsroboters und Reinigen einer ersten Zelle (C1) der mehreren Zellen (52;102); und
einen Bewegungsschritt zum Fahren des Reinigungsroboters zur nächsten Zelle, die eine zweite Zelle (C2) ist, wenn es nach dem Reinigen der ersten Zelle (C1) eine oder mehrere zu reinigende Zellen gibt,
wobei der Reinigungsschritt und der Bewegungsschritt wiederholt werden, bis die mehreren Zellen (52, 102) gereinigt sind, und
wobei der Reinigungsraum auf einer zellenweisen Grundlage gereinigt wird,
**dadurch gekennzeichnet, dass** das Verfahren ferner einen erneuten Festlegungsschritt zum Festlegen eines weiteren Reinigungsraums, der einen zu reinigenden Raum aufweist, mit Ausnahme des bereits gereinigten Raums, und das Aufteilen des weiteren Reinigungsraums in mehrere Zellen aufweist, nachdem die Reinigungsschritte des vorher festgelegten Reinigungsraums beendet sind.

2. Verfahren nach Anspruch 1, wobei der Reinigungsraum in die Richtung einer Spirale (56; 106) auf der zellenweisen Grundlage gereinigt.

3. Verfahren nach Anspruch 1, wobei der Reinigungsroboter gemäß irgendeinem Modus eines Spiralfahrmodus, eines Zickzackfahrmodus und eines zufälligen Fahrmodus gefahren wird, um die Zelle zu reinigen, während sich eine Fahrstrecke minimal überlappt.

4. Verfahren nach Anspruch 1, wobei der Reinigungsroboter in dem Raum angeordnet wird, der den nächsten zu reinigenden Zellen (52; 102) benachbart ist, wenn die erste Zelle (C1) gereinigt ist.

5. Verfahren nach Anspruch 4, wobei die zweite Zelle (C2) in dem Raum angeordnet ist, der der ersten Zelle (C1) benachbart ist.

6. Verfahren nach Anspruch 1, wobei es mindestens eine Zelle gibt, die dieselbe Fahrstrecke wie die erste Zelle (C1) aufweist.

7. Verfahren nach Anspruch 1, wobei jede der Zellen (52; 102) in der Form eines Rechtecks oder eines Quadrats ausgebildet ist.

8. Verfahren nach Anspruch 1, wobei der Reinigungsschritt einen oder mehrere Fahrschritte zum Fahren des Reinigungsroboters längs einer Zickzackstrecke (64; 74; 94a; 94b; 114) aufweist, die aufweist:
mehrere erste Strecken, die parallel zueinander in vorgegebenen Abständen angeordnet sind, so dass sich die Reinigungsräume nicht gegenseitig überlappen, während das Innere von jeder der Zellen (52; 102), die den entsprechenden Reinigungsschritten zugeordnet sind, vollständig gereinigt wird; und
mehrere zweite Strecken, die zwischen den benachbarten ersten Strecken mit dem minimalen Abstand verbunden sind, so dass der Reinigungsroboter kontinuierlich längs der ersten Strecken gefahren wird, während sich die ersten Strecken nicht gegenseitig überlappen.

9. Verfahren nach Anspruch 1, das ferner aufweist:
einen Hinderniswahrnehmungsschritt zum Wahrnehmen eines Hindernisses (128; 138), während der Reinigungsroboter während der Ausführung des Reinigungsschritts oder des Bewegungsschritts gefahren wird; und
einen Hindernisumgehungsschritt, um es dem Reinigungsroboter zu ermöglichen, das Hindernis (128; 138) zu umgehen, das im Hinderniswahrnehmungsschritt wahrgenommen wird, während der Reinigungsroboter gefahren wird.

10. Verfahren nach Anspruch 1, wobei im Reinigungsschritt der Reinigungsroboter durch die Zellen (C2-C9) von der ersten Zelle (C1) im Uhrzeigersinn oder gegen den Uhrzeigersinn gefahren wird.

11. Verfahren nach Anspruch 10, wobei die erste Zelle (C1) in der Mitte der mehreren Zellen (52, 102) des Reinigungsraums angeordnet ist.

## Revendications

1. Procédé de commande d'un aspirateur robot, comprenant :
une étape de définition d'un espace de nettoyage comportant un espace à nettoyer, et de division de l'espace de nettoyage en une pluralité de cellules (52 ; 102) ;
une étape de nettoyage où l'aspirateur robot est entraîné et nettoie une première cellule (C1) de la pluralité de cellules (52 ;102) ; et
une étape de déplacement où l'aspirateur robot est déplacé vers la cellule suivante qui est une deuxième cellule (C2), si une ou plusieurs cellules ont à être nettoyées après la première cellule (C1),
l'étape de nettoyage et l'étape de déplacement étant répétées jusqu'à ce que la pluralité de cellules (52, 102) ait été nettoyées, et
l'espace de nettoyage étant nettoyé sur la base des cellules,
**caractérisé en ce que** ledit procédé comprend en outre une étape de redéfinition où est défini un autre espace de nettoyage comportant un espace à nettoyer, excluant l'espace déjà nettoyé, et de division de l'autre espace de nettoyage en une pluralité de cellules après exécution des étapes de nettoyage de l'espace de nettoyage précédemment défini.

2. Procédé selon la revendication 1, où l'espace de nettoyage est nettoyé dans la direction d'une spirale (56 ; 106) sur la base des cellules.

3. Procédé selon la revendication 1, où l'aspirateur robot est entraîné pour nettoyer la cellule suivant un mode quelconque entre un mode d'entraînement en spirale, un mode d'entraînement en zigzag et un mode d'entraînement aléatoire, un trajet d'entraînement étant chevauché au minimum.

4. Procédé selon la revendication 1, où l'aspirateur robot est positionné dans l'espace adjacent aux cellules suivantes (52 ; 102) à nettoyer quand la première cellule (C1) est nettoyée.

5. Procédé selon la revendication 4, où la deuxième cellule (C2) est présentée dans l'espace adjacent à la première cellule (C1).

6. Procédé selon la revendication 1, où au moins une cellule ayant le même trajet d'entraînement que la première cellule (C1) est présentée.

7. Procédé selon la revendication 1, où chacune des cellules (52 ; 102) a la forme d'un rectangle ou d'un carré.

8. Procédé selon la revendication 1, où l'étape de nettoyage comprend une ou plusieurs étapes d'entraînement de l'aspirateur robot sur un trajet en zigzag (64 ; 74 ; 94a ; 94b ; 114), comprenant :
une pluralité de premiers trajets disposés en parallèle l'un à l'autre à intervalles définis de sorte que les espaces de nettoyage ne se chevauchent pas tandis que l'intérieur de chacune des cellules (52 ; 102) affectées au nettoyage correspondant est entièrement nettoyé ; et
une pluralité de deuxièmes trajets raccordés à distance minimale entre les premiers trajets adjacents de sorte que l'aspirateur robot est entraîné de manière continue sur les premiers trajets tandis que les premiers trajets ne se chevauchent pas.

9. Procédé selon la revendication 1, comprenant en outre :
une étape de détection d'obstacle où un obstacle (128 ; 138) est détecté tandis que l'aspirateur robot est entraîné pendant l'exécution de l'étape de nettoyage ou de l'étape de déplacement ; et
une étape de contournement d'obstacle permettant à l'aspirateur robot de contourner l'obstacle (128 ; 138) détecté lors de l'étape de détection d'obstacle tandis que l'aspirateur robot est entraîné.

10. Procédé selon la revendication 1, où, lors de l'étape de nettoyage, l'aspirateur robot est entraîné sur des cellules (C2∼C9) dans le sens ou le sens inverse des aiguilles d'une montre à partir de la première cellule (C1).

11. Procédé selon la revendication 10, où la première cellule (C1) est disposée au centre de la pluralité de cellules (52, 102) de l'espace de nettoyage.
